# EUROPÄISCHE PATENTSCHRIFT

(11) **EP 3 552 787 B1**
(45) Veröffentlichungstag und Bekanntmachung des Hinweises auf die Patenterteilung: **26.07.2023**
(21) Anmeldenummer: 18166567.0
(22) Anmeldetag: 10.04.2018
(51) Int. Cl.: B27N 3/12, B27L 11/02, B27N 3/00, E04B 1/78, B27N 3/02, B27N 3/04, B27N 3/10, E04B 1/76, E04B 1/74, F16L 59/04

(54) **VERFAHREN ZUR HERSTELLUNG EINES WÄRMEDÄMMSTOFFS**
METHOD FOR PRODUCTION OF HEAT INSULATING MATERIAL
PROCÉDÉ DE FABRICATION DE MATÉRIAU ISOLANT THERMIQUE

(43) Veröffentlichungstag der Anmeldung: 16.10.2019
(73) Patentinhaber: Groß, Lucia, 8843 Oberiberg (CH)
(72) Erfinder: Groß, Lucia, 8843 Oberiberg (CH)
(74) Vertreter: Reinhardt, Annette

(56) Entgegenhaltungen:
- EP-A1- 2 813 629
- EP-A2- 2 045 408
- EP-B1- 0 627 978
- DE-A1- 19 516 186
- US-A1- 2002 121 327
- US-A1- 2013 300 015

## Beschreibung

Die Erfindung betrifft ein Verfahren zur Herstellung eines Wärmedämmstoffs.

Aus der DE 10 2007 047 542 A1 ist ein Wärmedämmstoff bekannt, der aus Holzspänen und Zellulosefasern zusammengesetzt ist. Der Wärmedämmstoff besteht aus lose miteinander vermischten Holzspänen und Zellulosefasern. Die Holzspäne bilden eine Matrix, wobei in die Hohlräume zwischen den Holzspänen die Zellulosefasern eingelagert sind.

Die EP 2 045 408 A2 offenbart ein gattungsgemäßes Verfahren zur Herstellung eines Wärmedämmstoffs. Die Holzspäne werden durch Zerspanung von waldfeuchtem Holz hergestellt und anschließend auf eine Restfeuchte von 8% bis 12% oder weniger getrocknet, bevor sie mit Zellulosefasern gemischt werden.

Die EP 2 813 629 A1 offenbart ein Verfahren zur Herstellung einer Mischung unterschiedlicher Isolationsmaterialien, bei dem Ballen unterschiedlicher Materialen gleichzeitig abgetragen werden.

Aus der US 2002/0121327 A1 geht ein Verfahren zur Herstellung gepresster Gegenstände aus Lignozellulose, beispielsweise OSB-Platten, hervor.

Die US 2013/0300015 A1 offenbart ein Verfahren zur Herstellung eines feuerfesten Zellulosematerials. Das Zellulosematerial wird zerkleinert und dann mit Flammschutzmittel gemischt. Anschließend kann dem Zellulosematerial Feuchtigkeit zugeführt werden.

Die EP 0 627 978 B1 offenbart ein Verfahren zur Herstellung von Wärmedämmplatten, bei dem die Rohstoffe zerkleinert, mit Flammschutzmittel gemischt und anschließend einem Kompressionsvorgang unterzogen werden.

Die DE 195 16 186 A1 offenbart ein Verfahren zur Herstellung von Dämmmaterial aus Naturmaterialien. Aus den Komponenten wird ein homogenes Gemisch im Trockenmischer hergestellt und anschließend werden Flammschutzmittel zugegeben.

Der Erfindung liegt die Aufgabe zugrunde, ein Verfahren zur Herstellung eines Wärmedämmstoffs anzugeben.

Diese Aufgabe wird durch ein Verfahren mit den Merkmalen des Anspruchs 1 gelöst.

Für das Verfahren zur Herstellung eines Wärmedämmstoffs mit Holzspänen und Zellulosefasern ist vorgesehen, dass die Holzspäne durch Zerspanung von Holz in feuchtem Zustand hergestellt werden und dass die Holzspäne nach der Zerspanung mit einer Restfeuchte von mindestens 20% mit den Zellulosefasern gemischt werden. Vorteilhaft werden alle Komponenten des Wärmedämmstoffs in feuchtem Zustand der Holzspäne der ersten Komponente und insbesondere auch der Holzspäne von weiteren Komponenten mit einer Restfeuchte der Holzspäne von mindestens 20%, gemischt.

Bisher ging man davon aus, dass die Holzspäne vor der Vermischung mit weiteren Komponenten zu trocknen sind. Es hat sich nun jedoch gezeigt, dass auch eine Vermischung in feuchtem Zustand der Holzspäne möglich ist, so dass der Trocknungsschritt entfallen kann. Die Vermischung der Holzspäne in feuchtem Zustand mit Zellulosefasern ist insbesondere dann vorteilhaft, wenn eine Komponente bereits Flammschutzmittel oder andere Zuschlagstoffe enthält. Durch die Vermischung der Komponenten in feuchtem Zustand der Holzspäne wird eine Migration z. B. des Flammschutzmittels insbesondere von bereits vorbehandelten Zellulosefasern zu der oder den nicht vorbehandelten Komponenten erreicht. Zellulosefasern sind insbesondere dann bereits vorbehandelt, wenn sie aus Papier, beispielsweise aus Hygienepapier oder Dekorpapier hergestellt sind. Durch die Mischung der Komponenten in feuchtem Zustand kann die benötigte Flammschutzmittelmenge, die dem Wärmedämmstoff noch zuzugeben ist, deutlich verringert werden. Es hat sich gezeigt, dass die gleiche Brandklassifizierung mit der gegenüber der Mischung von trockenen Komponenten halbierten Flammschutzmittelmenge erzielt werden kann.

Zellulosefasern aus Papier, insbesondere aus Hygienepapier oder Dekorpapier, weisen eine sehr große Oberfläche auf. Insbesondere Zellulosefasern aus Papier beschleunigen die Trocknung der Holzspäne aufgrund ihrer hygroskopischen Eigenschaft und aufgrund ihrer großen Oberfläche. Die Feuchte der Späne wird durch die Zellulosefasern abtransportiert und steht für Mikroorganismen wie Schimmelpilze nicht mehr zur Verfügung.

Die Holzspäne sind durch Zerspanung von feuchtem, insbesondere von waldfrischem Holz hergestellt. Es hat sich gezeigt, dass bei Zerspanung von feuchtem, insbesondere waldfrischem Holz geringere Setzungsdichten der Späne erzielt werden können und Späne mit vorteilhafter, glatter Oberfläche herstellbar sind. Gleichzeitig ist die Energie, die für die Zerspanung von feuchtem Holz benötigt wird, geringer als die für die Zerspanung von trockenem Holz benötigte Energie. Die aus feuchtem Holz zerspanten Späne werden erfindungsgemäß ohne weiteren Trocknungsschritt mit der mindestens einen weiteren Komponente vermischt. Ein Anfeuchten der Holzspäne, beispielsweise zur Aktivierung eines Bindemittels mittels Dampf oder Wasser, kann vorgesehen sein. Bevorzugt findet jedoch kein Anfeuchten der Holzspäne statt.

Vorteilhaft beträgt der Feuchtegehalt der Zellulosefasern mit evtl. zugesetzten Zusatzstoffen wie Flammschutzmitteln, Fungiziden, Bindemitteln oder dgl. beim Mischen der Komponenten höchstens 18%. Die Zellulosefasern können demnach zwar feucht, aber nicht nass sein. Es erfolgt kein Aufschlämmen der Zellulosefasern. Dadurch bleiben das große Volumen der Zellulosefasern und die vergleichsweise geringe Dichte des Wärmedämmstoffs erhalten.

Vorteilhaft wird außer evtl. zugegebenen Zusatzstoffen wie Flammschutzmitteln, Fungiziden oder dgl., die mit Wasser verdünnt oder in Wasser gelöst sein können, kein zusätzliches Wasser zugegeben. Abgesehen von evtl. zugegebenen flüssigen Zusatzstoffen rührt die Feuchte des Dämmstoffes nur von der Feuchte des waldfrischen Holzes.

Es ist vorgesehen, dass der Wärmedämmstoff aus zumindest zwei dämmenden Komponenten zusammengesetzt ist. Zusätze zu den dämmenden Komponenten wie beispielsweise Flammschutzmittel, Fungizide, Bindemittel oder dergleichen bilden selbst keine dämmenden Komponenten im Sinne der vorliegenden Schrift. Eine dämmende Komponente umfasst Holzspäne und eine weitere dämmende Komponente umfasst Zellulosefasern, insbesondere aus Dekorpapier oder aus Hygienepapier. Es hat sich gezeigt, dass Zellulosefasern aus Dekorpapier oder Hygienepapier eine besonders niedrige Wärmeleitfähigkeit aufweisen. Dekorpapier und Hygienepapier zeichnen sich durch einen hohen Anteil kurzer Fasern aus. Es hat sich gezeigt, dass diese kurzen Zellulosefasern sich mit den Holzspänen besonders gut mischen lassen und gut in den zwischen den Holzspänen gebildeten Hohlräumen eingelagert werden können. Die Kombination von Holzspänen mit Zellulosefasern aus Dekorpapier oder Hygienepapier ergibt einen Dämmstoff mit sehr guten Dämmeigenschaften und mit einer vergleichsweise geringen Setzungsdichte. Dekorpapier und Hygienepapier sind außerdem gut und günstig verfügbar. Hygienepapier besitzt außerdem einen geringen Anteil an Füllstoffen, insbesondere Staub.

Dekorpapier im Sinne der vorliegenden Anmeldung ist Spezialpapier, insbesondere zur Oberflächenveredelung von Holzwerkstoffen, wobei vorliegend nur Dekorpapier ohne Kunstharzimprägnierung zum Einsatz kommen soll. Hygienepapier im Sinne der vorliegenden Anmeldung umfasst Tissuepapier, tissueähnliches Papier sowie im Airlaid-Verfahren hergestelltes Papier.

Vorteilhaft weisen die Zellulosefasern der zweiten Komponente eine maximale Faserlänge von 12 mm auf.

Es ist bevorzugt vorgesehen, dass die Holzspäne der ersten Komponente aus Laubholz sind. Es hat sich gezeigt, dass entgegen der bisherigen Annahme Laubholz gute Dämmeigenschaften bei ausreichend niedriger Setzungsdichte besitzt. Die Setzungsdichte ist dabei die Dichte der Späne nach einer vorgegebenen Setzung, insbesondere nach Aufbringung einer vorgegebenen Prüflast über einen vorgegebenen Zeitraum. Laubhölzer sind anspruchslos und daher weit verbreitet. Aufgrund der guten Verfügbarkeit von Laubholz können Transportwege bei der Herstellung des Dämmstoffes gering gehalten werden, so dass der Dämmstoff ökologisch herstellbar ist.

In besonders vorteilhafter Gestaltung ist das Laubholz der ersten Komponente Holz von Weidengewächsen, insbesondere Holz von Pappel (populus), Espe (populus tremula) oder Birke (betula). Pappel, Espe und Birke weisen eine höhere Schimmelresistenz und gleichzeitig eine niedrigere Wärmeleitfähigkeit auf als Späne aus Nadelhölzern. Späne aus Pappel, Espe oder Birke weisen auch eine höhere Schimmelresistenz und niedrigere Wärmeleitfähigkeit auf als Späne aus anderen Laubholzarten. Auch der Insektenbefall ist bei Laubholz von Espe oder Pappel deutlich geringer als bei Nadelhölzern und auch als bei anderen Laubholzarten. Die etwas erhöhte Setzungsdichte von Pappel und Espe wird durch die geringere Wärmeleitfähigkeit teilweise ausgeglichen, so dass sich vorteilhafte Eigenschaften des Wärmedämmstoffs ergeben. In besonders bevorzugter Gestaltung kann vorgesehen sein, dass der Wärmedämmstoff als weitere Komponente Späne aus Nadelholz aufweist. Dadurch kann ein charakteristischer Geruch des Dämmstoffs erzielt werden.

Um besonders elastische, bruchsichere Späne zu erzielen, ist vorteilhaft vorgesehen, dass die Faserlängsrichtung des Holzes der Holzspäne überwiegend in Längsrichtung der Holzspäne verläuft. Dadurch wird eine besonders niedrige setzungssichere Dichte des Dämmstoffs erreicht. Die setzungssichere Dichte kann beispielsweise um ein Drittel niedriger liegen als bei aufgeblasenen Dämmstoffen aus Zellulosefasern aus Altpapier und eine um 20% niedrigere Dichte als die Dichte von Dämmstoffen aus Zellulosefasern aus Altpapier im geschlossenen Hohlraum.

Holzspäne, bei denen die Faserrichtung des Holzes überwiegend in Längsrichtung der Holzspäne verläuft, können hergestellt werden, indem das Schneidwerkzeug, beispielsweise eine Schneide eines Fräswerkzeugs, in einer Ebene parallel zur Längsmittelachse eines Holzstamms bewegt wird. Wird das Fräswerkzeug quer zur Faserlängsrichtung des Holzes bewegt, so schneidet jeder Span eine Vielzahl von Jahresringen des Holzes. Dies resultiert in einer größeren Dichte und somit größerem Rohstoffbedarf des Wärmedämmstoffs. Es hat sich auch gezeigt, dass die Späne dadurch weniger elastisch sind und leichter brechen als Späne, die keine oder nur wenige Jahresringe schneiden. Als Holzspäne können in alternativer Ausführung jedoch auch in Späneform vorliegende Holzbearbeitungsabfälle oder Holzfasern vorgesehen sein, bei denen die Faserlängsrichtung nicht überwiegend in Holzlängsrichtung verläuft.

Vorteilhaft sind die Holzspäne durch Zerspanen eines Holzstamms mittels Kegelstirnplanfräser hergestellt. Der mit dem Holzstamm in Kontakt stehende Bereich des Kegels des Kegelstirnplanfräsers ist dabei vorteilhaft etwa parallel zur Längsmittelachse des Holzstamms orientiert. Dadurch können Späne hergestellt werden, deren Faserlängsrichtung überwiegend in Holzlängsrichtung verläuft und die dadurch besonders elastisch sind.

Der Massenanteil jeder dämmenden Komponente des Wärmedämmstoffs beträgt vorteilhaft von 10% bis 90%. Dabei kann der Wärmedämmstoff genau zwei Komponenten enthalten. Auch eine größere Zahl von Komponenten kann jedoch vorteilhaft sein. Als Komponente wird vorliegend ein dämmender Stoff angesehen, der aus einem Ausgangsmaterial in einem einheitlichen Fertigungsverfahren herstellbar ist. Beispielsweise bilden Holzspäne und Zellulosefasern aus dem gleichen Ausgangsmaterial zwei Komponenten. Ebenso bilden Zellulosefasern aus unterschiedlichen Ausgangsmaterialien, beispielsweise Zellulosefasern aus Holz, Zellulosefasern aus Naturfasern, Zellulosefasern aus Hygienepapier und Zellulosefasern aus Dekorpapier, unterschiedliche Komponenten.

In besonders vorteilhafter Gestaltung beträgt der Massenanteil jeder dämmenden Komponente des Wärmedämmstoffs von 10% bis 80%, insbesondere von 20% bis 80%. In besonders vorteilhafter Gestaltung ist der Massenanteil aller dämmenden Komponenten des Wärmedämmstoffs im Rahmen der Herstelltoleranzen ähnlich. Der Massenanteil der einzelnen Komponenten des Wärmedämmstoffs ändert sich dabei insbesondere durch Trocknungsvorgänge. Die Massenanteile der einzelnen Komponenten des Wärmedämmstoffs weichen vorteilhaft um weniger als 30%, insbesondere um weniger als 20% voneinander ab.

Um eine geringe Wärmeleitfähigkeit zu erreichen, ist insbesondere vorgesehen, dass der Massenanteil der Zellulosefasern aus Hygienepapier oder Dekorpapier mehr als 10%, insbesondere 30% bis 70%, vorzugsweise etwa 50% beträgt.

Vorteilhaft besitzt der Wärmedämmstoff zumindest eine dritte dämmende Komponente. Die dritte dämmende Komponente sind bevorzugt Federn, Späne aus einem Nadelholz oder Naturfasern. Die Naturfasern können dabei ebenfalls als Zellulosefasern vorliegen und beispielsweise aus Papier, Holz, Jute, Hanf, Flachs oder Miscanthus sein. Die Zellulosefasern der dritten dämmenden Komponente können auch aus anderen Papiersorten als Dekorpapier und Hygienepapier, insbesondere aus Altpapier, beispielsweise aus Tageszeitungs-Altpapier, sein. Altpapier, beispielsweise aus Tageszeitungen, ist gut verfügbar und günstig und als Wärmedämmstoff gut geeignet und etabliert. Auch Altpapier aus anderen Papiersorten kann vorteilhaft sein. Die Zellulosefasern der zweiten Komponente bestehen aus einem anderen Ausgangsmaterial als die Zellulosefasern der dritten Komponente. Die zweite und dritte Komponente unterscheiden sich durch das Ausgangsmaterial und können sich auch in der Gestalt der Zellulosefasern, beispielsweise deren mittlerer Länge, unterscheiden. Es kann auch vorgesehen sein, dass die dritte Komponente Holzspäne umfasst, wobei die Holzspäne der dritten Komponente entweder aus einem anderen Holz sind als die Holzspäne der ersten Komponente oder eine andere Form, beispielsweise eine andere Länge oder mittlere Spandicke aufweisen.

Vorteilhaft ist mindestens eine Komponente, insbesondere die Zellulosefasern der ersten Komponente, insbesondere alle Zellulosefasern des Wärmedämmstoffs, mit Flammschutzmittel behandelt. Auch eine Behandlung anderer Komponenten, beispielsweise von Holzspänen oder Federn, mit Flammschutzmittel kann vorteilhaft sein. In bevorzugter Gestaltung sind alle Komponenten des Wärmedämmstoffs mit Flammschutzmittel behandelt. Auch eine Behandlung mit Fungiziden oder anderen Zusatzstoffen, die die Resistenz einer Komponente oder mehrerer Komponenten des Wärmedämmstoffs erhöhen, kann vorgesehen sein. Flammschutzmittel und andere resistenzerhöhende Mittel werden nicht als Komponente des Wärmedämmstoffs im Sinne der vorliegenden Anmeldung verstanden, da sie keine relevanten dämmenden Eigenschaften besitzen. Als Flammschutzmittel kommen alle verfügbaren Flammschutzmittel oder flammhemmenden Mittel in Betracht.

In vorteilhafter Gestaltung sind die Komponenten lose miteinander vermischt. Bei dem Wärmedämmstoff handelt es sich demnach um losen Wärmedämmstoff, der beispielsweise als Schüttung eingesetzt, in Hohlräume eingeblasen oder auf andere Weise verarbeitet werden kann. Beispielsweise kann auch eine Verarbeitung durch Aufsprühen, beispielsweise mit Hilfe von Klebstoff oder Wasser, vorteilhaft sein.

In alternativer vorteilhafter Gestaltung ist der Wärmedämmstoff eine Dämmmatte, und die Komponenten sind über ein Bindemittel miteinander verbunden. Das Bindemittel kann beispielsweise ein Klebstoff sein oder durch Schmelzklebfasern, insbesondere Bikomponentenfasern, gebildet sein. Die Komponenten der Dämmmatte bilden dabei vorteilhaft keine kompakte, feste Platte, sondern die Dämmmatte besitzt eine Vielzahl von Hohlräumen, die zwischen den Komponenten gebildet sind und die von dem Bindemittel nicht ausgefüllt sind. Die Dämmmatte ist vorteilhaft eine flexible Dämmmatte. Die Dichte der Dämmmatte beträgt insbesondere 15 kg/m³ bis 120 kg/m³, vorzugsweise 30 kg/m³ bis 60 kg/m³.

In weiterer vorteilhafter alternativer Gestaltung ist der Wärmedämmstoff eine Dämmplatte. Die Komponenten der Dämmplatte sind vorteilhaft über ein Bindemittel verbunden. Die Dämmplatte ist formstabil und kompakt. Es hat sich gezeigt, dass sich durch Verwendung von Zellulosefasern aus Hygienepapier oder Dekorpapier Dämmplatten mit niedriger Dichte herstellen lassen. Es hat sich auch gezeigt, dass durch Verwendung von Holzspänen, die in einem Kegelstirnplanfräsverfahren hergestellt sind, auch unabhängig von der Verwendung von Zellulosefasern aus Hygienepapier oder Dekorpapier Dämmplatten mit sehr niedriger Dichte herstellen lassen. Die Verwendung von Holzspänen, die in einem Kegelstirnplanfräsverfahren hergestellt sind, für eine Dämmplatte stellt einen unabhängigen, eigenständigen erfinderischen Gedanken dar. Eine besonders niedrige Dichte kann durch Verwendung von Spänen, bei denen die Faserlängsrichtung des Holzes überwiegend in Längsrichtung der Holzspäne verläuft, erreicht werden. Die Dichte der Dämmplatte aus Holzspänen, bei denen die Faserlängsrichtung des Holzes überwiegend in Längsrichtung der Holzspäne verläuft, beträgt vorteilhaft nicht mehr als 500 kg/m³, insbesondere nicht mehr als 400 kg/m³. Die Holzspäne sind vorteilhaft in einem Kegelstirnplanfräsverfahren hergestellt. Dämmplatten gleicher Eigenschaften, die aus Holzspänen in herkömmlichen Verfahren hergestellt sind, bei denen also die Faserlängsrichtung des Holzes quer zur Längsrichtung der Holzspäne verläuft, besitzen dagegen üblicherweise eine Dichte in der Größenordnung von etwa 600 kg/m³.

Für eine Platte ist vorgesehen, dass die Platte Holzspäne aufweist, die über ein Bindemittel miteinander verbunden sind. Die Holzspäne sind durch Zerspanen eines Holzstamms mittels Kegelstirnplanfräser hergestellt. Es hat sich gezeigt, dass sich durch Verwendung von Holzspänen, die mittels Kegelstirnplanfräser hergestellt wurden, Platten herstellen lassen, die gegenüber Platten, die mit herkömmlichen Holzspänen hergestellt sind, beispielsweise gegenüber OSB-Platten, eine deutlich verringerte Dichte bei vergleichbaren mechanischen Eigenschaften aufweisen. Die Dichte der Platte beträgt vorteilhaft nicht mehr als 500 kg/m³, insbesondere nicht mehr als 400 kg/m³.

Ausführungsbeispiele der Erfindung werden im Folgenden anhand der Zeichnung erläutert. Es zeigen:
- Fig. 1: eine Darstellung eines Wärmedämmstoffs,
- Fig. 2: eine schematische Darstellung eines Verfahrens zur Herstellung von vorteilhaften Holzspänen für den Wärmedämmstoff,
- Fig. 3: eine schematische Draufsicht auf die Anordnung aus Fig. 2 in Richtung des Pfeils IV in Fig. 2,
- Fig. 4: eine schematische Darstellung eines weiteren Ausführungsbeispiels des Wärmedämmstoffs,
- Fig. 5: eine schematische Darstellung einer Platte.

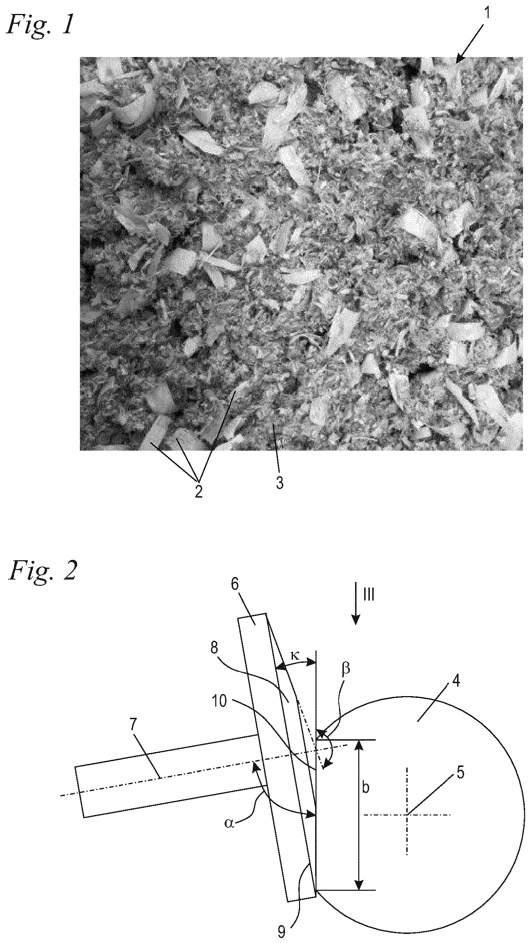

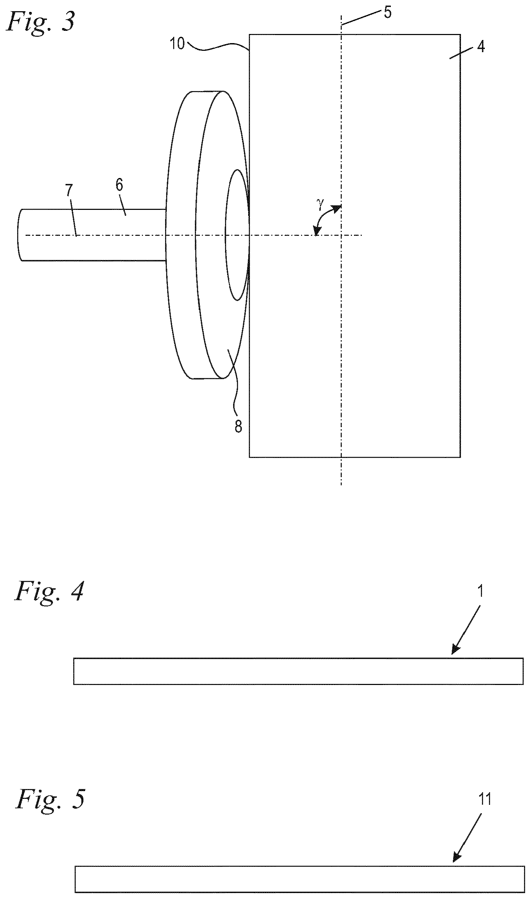

Fig. 1 zeigt Wärmedämmstoff 1, der in loser Form vorliegt und beispielsweise als Schüttgut zu verarbeiten oder in Hohlräume von Gebäuden einzublasen ist. In alternativer Ausführung kann der Wärmedämmstoff 1 auch eine Dämmmatte sein, wie zu Fig. 4 beschrieben ist. Der Wärmedämmstoff 1 umfasst Holzspäne 2 und Zellulosefasern 3, die lose miteinander vermischt sind. Die Holzspäne 2 bilden Hohlräume, in denen die Zellulosefasern 3 angeordnet sind. Die Holzspäne 2 bilden damit ein Stützgerüst für die Zellulosefasern 3. Dadurch wird die Setzungsdichte des Wärmedämmstoffs 1 deutlich verringert. Die Holzspäne 2 besitzen eine geringere Dichte als die Zellulosefasern 3. Die Holzspäne 2 bilden eine erste Komponente des Wärmedämmstoffs 1, und die Zellulosefasern 3 bilden eine zweite Komponente des Wärmedämmstoffs 1.

Die Holzspäne 2 der ersten Komponente sind im Ausführungsbeispiel aus Laubholz. Das Laubholz ist bevorzugt Holz von Weidengewächsen, insbesondere von Pappel (populus), Espe (populus tremula) oder Birke (betula). In alternativer Gestaltung können die Holzspäne 2 auch aus Nadelholz sein. Die Zellulosefasern 3 der zweiten Komponente sind aus Dekorpapier oder Hygienepapier hergestellt. Die Zellulosefasern 3 der zweiten Komponente sind vorteilhaft vergleichsweise kurz. Insbesondere Zellulosefasern aus Hygienepapier weisen darüber hinaus einen geringen Anteil an Füllstoffen wie insbesondere Staub auf.

Die Zellulosefasern 3 besitzen vorteilhaft eine maximale Faserlänge von 12 mm.

Die Holzspäne 2 sind so ausgebildet, dass die Faserlängsrichtung des Holzes überwiegend in Längsrichtung der Holzspäne 2 verläuft. Die Holzspäne schneiden dadurch nur wenige, insbesondere keine Jahresringe eines Holzstammes. Dadurch besitzen die Holzspäne eine hohe Elastizität und Flexibilität und gleichzeitig eine geringe Bruchneigung.

Die Herstellung der Holzspäne 2 ist in Fig. 2 und 3 schematisch dargestellt. Fig. 2 zeigt schematisch einen Holzstamm 4 mit einer Längsmittelachse 5. Der Holzstamm 4 besitzt eine Bearbeitungsfläche 10. Zur Herstellung der Holzspäne 2 ist ein Kegelstirnplanfräser 6 vorgesehen, der an der Bearbeitungsfläche 10 eingreift und den Holzstamm 4 zerspant. Der Kegelstirnplanfräser 6 ist um eine Drehachse 7 drehbar gelagert ist. Der Kegelstirnplanfräser 6 besitzt eine Kegelfläche 8, die rotationssymmetrisch um die Drehachse 7 verläuft. Die Drehachse 7 des Kegelstirnplanfräsers 6 ist in der in Fig. 2 gezeigte Blickrichtung parallel zur Längsmittelachse 5 zur Bearbeitungsfläche 10 des Holzstamms 4 um einen Neigungswinkel α geneigt. Der Winkel α beträgt vorteilhaft 45° bis 88°, insbesondere 60° bis 80° und besonders bevorzugt etwa 70°. Der Kegelstirnplanfräser 6 besitzt einen Einstellwinkel κ, der der Neigung einer Grundfläche 9 des Kegels zur Kegelfläche 8 entspricht. Die Grundfläche 9 ist dabei senkrecht zur Drehachse 7 des Kegelstirnplanfräsers 6 ausgerichtet. Der Einstellwinkel κ beträgt vorteilhaft 2° bis 45°, insbesondere 10° bis 30°. Als besonders vorteilhaft hat sich ein Einstellwinkel κ von etwa 20° herausgestellt. Der Neigungswinkel α und der Einstellwinkel κ ergeben zusammen 90°. Der Kegelwinkel β, der zwischen gegenüberliegenden Bereichen der Kegelfläche 8 gemessen ist, beträgt vorteilhaft 90° bis 176°, insbesondere 120° bis 160° und besonders bevorzugt etwa 140°. Die Breite b des Holzstamms 4 in dem Bereich, in dem die Holzspäne 7 hergestellt werden, beträgt vorteilhaft mindestens 5 mm.

Fig. 3 zeigt die Anordnung aus Fig. 2 in einer Draufsicht in einer Blockrichtung parallel zur Bearbeitungsfläche 10 und senkrecht zur Längsmittelachse 5 des Holzstamms 4. In dieser Blickrichtung schließt die Drehachse 7 mit der Längsmittelachse 5 einen Winkel γ ein, der von 45° bis 135°, insbesondere 75° bis 105 ° und bevorzugt etwa 90° beträgt.

Die Holzspäne 2 besitzen vorteilhaft eine mittlere Spandicke von etwa 0,1 mm bis 5 mm. Mit dem Kegelstirnplanfräser 6 hergestellte Holzspäne 2 besitzen vorteilhaft eine mittlere Spanungsdicke, die sich aus dem Zahnvorschub multipliziert mit sinκ berechnet, wobei der Zahnvorschub die Vorschubgeschwindigkeit geteilt durch die Schneidenanzahl und die Drehzahl des Kegelstirnplanfräsers 6 ist. Eine Schneide kann sich dabei aus einer Vielzahl von Wendeschneidplatten zusammensetzen. Eine Schneide, die sich über die Mitte des Kegels zur gegenüberliegenden Seite des Kegels fortsetzt, wird dabei als eine Schneide betrachtet.

Die Zellulosefasern 3 sind im Ausführungsbeispiel aus Hygienepapier oder Dekorpapier hergestellt. In vorteilhafter Ausführung sind die Zellulosefasern 3 mit Flammschutzmittel behandelt. Zusätzlich oder alternativ kann eine Behandlung mit anderen resistenzerhöhenden Mitteln, insbesondere mit Fungiziden, vorgesehen sein.

Bei der Herstellung des Wärmedämmstoffs 1 werden die Holzspäne 2 vorteilhaft durch Zerspanung von feuchtem, insbesondere waldfrischem Holz und insbesondere mittels eines Kegelstirnplanfräsers 6 hergestellt. Dadurch ergibt sich eine sehr glatte Oberfläche und hohe Elastizität der Holzspäne 2. Die Holzspäne 2 werden nach der Zerspanung in feuchtem Zustand mit der zweiten Komponente, also den Zellulosefasern 3, sowie mit möglichen weiteren Komponenten des Wärmedämmstoffs 1 gemischt. Die Holzspäne 2 besitzen beim Vermischen dabei eine Restfeuchte von mindestens 20%. Es hat sich gezeigt, dass durch die Vermischung der Zellulosefasern 3 mit feuchten Holzspänen 2 eine einfachere Migration des Flammschutzmittels von den Zellulosefasern 3 zu den Holzspänen 2 gegeben ist. Bei trockenen Komponenten erfolgt diese Migration langsamer, so dass erhöhte Mengen an Flammschutzmittel zugefügt werden müssen, um bereits kurz nach der Mischung die gewünschte Brandschutzfestigkeit des Wärmedämmstoffs 1 zu erreichen. Durch die Mischung der Komponenten in feuchtem Zustand kann die benötigte Menge an Flammschutzmittel verringert werden, ohne dass sich die Dauer bis zum Einsatz des Wärmedämmstoffs 1 verlängert. Die Gesamtfeuchte des Dämmstoffs beim Mischen der Komponenten beträgt höchstens 15%. Die Komponenten sind demnach nicht nass. Insbesondere werden die Späne aus waldfrischem Holz ohne weiteren Trocknungs- oder Befeuchtungsschritt mit den trockenen Zellulosefasern unter Zugabe von mit Wasser verdünntem Flammschutzmittel gemischt.

Für eine alternative vorteilhafte Zusammensetzung des Wärmedämmstoffs 1 ist vorgesehen, dass der Wärmedämmstoff 1 neben den Holzspänen 2 und den Zellulosefasern 3 eine dritte dämmende Komponente besitzt. Vorteilhaft beträgt der Massenanteil der Holzspäne 2, der Zellulosefasern 3 und der dritten dämmenden Komponente jeweils 10% bis 80%. Insbesondere unterscheiden sich die Massenanteile der drei Komponenten um weniger als 30%, insbesondere um weniger als 20% voneinander.

Die dritte Komponente kann vorteilhaft durch Zellulosefasern gebildet sein, wobei die Zellulosefasern der dritten Komponente aus einem anderen Rohstoff hergestellt sind als die Zellulosefasern der zweiten Komponente. Beispielsweise kann die zweite Komponente durch Zellulosefasern aus einer anderen Papiersorte gebildet sein. Besonders vorteilhaft sind die Zellulosefasern der zweiten Komponente aus Hygienepapier und die Zellulosefasern der dritten Komponente aus Dekorpapier. Für einen Wärmedämmstoff aus Holzspänen, Zellulosefasern aus Dekorpapier und Zellulosefasern aus Hygienepapier ergeben sich besonders vorteilhafte Eigenschaften, wenn der Wärmedämmstoff einen Massenanteil von etwa 40% bis 60%, insbesondere von etwa 50% Holzspänen und einen Massenanteil von etwa 40% bis 60% Zellulosefasern aus Hygienepapier und Dekorpapier enthält. Bevorzugt beträgt der Massenanteil der Zellulosefasern aus Hygienepapier und der Massenanteil der Zellulosefasern aus Hygienepapier jeweils etwa 20% bis 30%, insbesondere etwa 25%. Auch andere Anteile von Zellulosefasern aus Hygienepapier und Zellulosefasern aus Dekorpapier können vorteilhaft sein.

Es kann jedoch auch vorgesehen sein, dass die Zellulosefasern der dritten Komponente beispielsweise aus Altpapier gebildet sind. Die dritte Komponente kann in alternativer Ausführung beispielsweise aus Zellulosefasern aus Naturfasern wie Holz, Jute, Hanf, Flachs oder Miscanthus bestehen. Eine vorteilhafte Zusammensetzung eines Wärmedämmstoffes besitzt einen Massenanteil von etwa 30% bis 70%, vorzugsweise etwa 30% bis 60% Späne. Der Wärmedämmstoff besitzt außerdem Zellulosefasern aus Holz und Zellulosefasern aus Papier, zumindest teilweise aus Dekor- und/oder Hygienepapier, in beliebigen Massenanteilen. In alternativer Ausführung kann eine Komponente des Wärmedämmstoffs durch Federn gebildet sein.

Es kann auch vorgesehen sein, dass die dritte Komponente durch die Naturfasern selbst, also nicht durch Zellulosefasern aus den Naturfasern, gebildet wird. Dadurch wird die Dichte des Wärmedämmstoffs 1 gegenüber der Dichte von Zellulosefasern verringert. Die dritte Komponente kann auch durch Späne aus einer anderen Holzsorte als die Holzspäne der zweiten Komponente gebildet sein. Beispielsweise können die Holzspäne der zweiten Komponente aus einem Weidengewächs sein und die Holzspäne der dritten Komponente aus einem Nadelholz. Die Späne aus einem Weidengewächs besitzen eine besonders niedrige setzungssichere Dichte. Die Späne aus einem Nadelholz besitzen den charakteristischen Holzgeruch. Durch Einsatz von Spänen aus unterschiedlichen Holzsorten kann ein Dämmstoff mit besonders vorteilhaften Eigenschaften bereitgestellt werden. Eine vorteilhafte Zusammensetzung sieht einen Massenanteil von etwa 40% bis 45% Spänen aus Laubholz, insbesondere aus Weidengewächsen, bevorzugt aus Pappel, ein Massenanteil von weniger als 10%, insbesondere von 5% bis 10% Spänen aus Nadelholz und Zellulosefasern aus Hygiene- oder Dekorpapier sowie weitere Komponenten in beliebiger Zusammensetzung vor. Bereits durch einen vergleichsweise geringen Anteil an Spänen aus Nadelholz kann ein Wärmedämmstoff mit charakteristischem Holzgeruch hergestellt werden. Es kann auch vorgesehen sein, dass alle Späne des Wärmedämmstoffs aus Nadelholz hergestellt sind.

In einer weiteren vorteilhaften Ausführung umfasst der Wärmedämmstoff neben der ersten, der zweiten und der dritten Komponente zumindest eine weitere vierte Komponente. Auch weitere Komponenten können vorteilhaft sein.

Die Wärmeleitfähigkeit des losen Wärmedämmstoffs 1 beträgt vorteilhaft weniger als 0,040 W/(m*K), insbesondere 0,036 bis 0,040 W/(m*K).

In einer weiteren alternativen Gestaltung liegt der Wärmedämmstoff 1 in gebundener Form vor, wie in Fig. 4 schematisch gezeigt ist. Die Komponenten des Wärmedämmstoffs 1 sind vorteilhaft über ein Bindemittel, insbesondere über Klebstoff oder Schmelzklebfasern wie beispielsweise Bikomponentenfasern miteinander verbunden. Das Bindemittel stellt vorteilhaft eine flexible Verbindung zwischen den Komponenten des Wärmedämmstoffs 1 her.

Der in Fig. 4 gezeigte Wärmedämmstoff 1 ist insbesondere eine Dämmmatte. Die Dämmmatte besitzt vorteilhaft eine vergleichsweise geringe Dichte. Die Dichte der Dämmmatte beträgt insbesondere 15 kg/m³ bis 120 kg/m³, vorzugsweise 30 kg/m³ bis 60 kg/m³. Die Komponenten und die Zusammensetzung der Komponenten der Dämmmatte entsprechen den zu losen Wärmedämmstoffen 1 beschriebenen Zusammensetzungen, wobei die Dämmmatte zusätzlich das Bindemittel enthält. Die Dämmmatte ist vorteilhaft flexibel und besitzt zwischen den Komponenten eine Vielzahl von Hohlräumen. Die Hohlräume werden von dem Bindemittel nicht ausgefüllt. Die Wärmeleitfähigkeit des als Dämmmatte ausgebildeten Wärmedämmstoffs 1 beträgt vorteilhaft weniger als 0,040 W/(m*K), insbesondere 0,036 W/(m*K) bis 0,040 W/(m*K).

In alternativer Ausführung ist der in Fig. 4 gezeigte Wärmedämmstoff 1 als Dämmplatte ausgebildet. Die Dämmplatte weist dabei eine vergleichsweise geringe Dichte auf. Die Dichte der Dämmplatte beträgt vorteilhaft nicht mehr als 500 kg/m³, insbesondere nicht mehr als 400 kg/m³. Die Dämmplatte ist vorteilhaft formstabil und kompakt und weist nur sehr wenige oder nur vernachlässigbar kleine luftgefüllten Hohlräume auf.

Bevorzugt beträgt der Massenanteil jeder dämmenden Komponente des Wärmedämmstoffs 10% bis 90%. Bei einem Wärmedämmstoff 1 aus mindestens drei dämmenden Komponenten beträgt der Massenanteil jeder dämmenden Komponente vorteilhaft 10% bis 80% und bei einem Wärmedämmstoff aus vier Komponenten vorteilhaft 10% bis 70%. Bevorzugt beträgt der Massenanteil jeder dämmenden Komponente mindestens 10%, insbesondere mindestens 20%. Als ähnliche Massenanteile werden Massenanteile angesehen, die sich um höchstens 30%, insbesondere höchstens 20% voneinander unterscheiden. Bei einem Wärmedämmstoff 1 aus zwei Komponenten beträgt der Massenanteil jeder Komponente vorteilhaft 35% bis 65%, insbesondere 40% bis 60%. Bei einem Wärmedämmstoff 1 aus drei Komponenten beträgt der Massenanteil jeder Komponente vorteilhaft 20% bis 50%, insbesondere 25% bis 45%. Vorteilhaft beträgt der Massenanteil keiner Komponente mehr als 90%.

Der Massenanteil der Zellulosefasern 3 aus Hygienepapier oder Dekorpapier beträgt vorteilhaft mehr als 10%, insbesondere 30% bis 70%, vorzugsweise etwa 50%. Besonders vorteilhaft besitzt der Wärmedämmstoff einen Masseanteil von 40% bis 60% insbesondere von etwa 50% Späne, unabhängig von den weiteren Komponenten des Wärmedämmstoffs.

Fig. 5 zeigt eine Ausführungsvariante einer Platte 11, die Holzspäne 2 aufweist. Die Holzspäne 2 sind über ein Bindemittel miteinander verbunden. Das Bindemittel kann beispielsweise durch Klebstoff, insbesondere Harze, oder Schmelzklebfasern wie beispielsweise Bikomponentenfasern gebildet sein. Als Bindemittel können übliche für OSB-Platten verwendete Bindemittel vorgesehen sein. Das Bindemittel stellt vorteilhaft eine feste Verbindung zwischen den Komponenten des Wärmedämmstoffs 1 her.

Die Platte 11 weist in vorteilhafter Ausführungsvariante keine Zellulosefasern 3 auf. In alternativer Variante ist vorgesehen, dass die Platte 11 Zellulosefasern 3, insbesondere Zellulosefasern 3 aus Hygienepapier oder Dekorpapier, enthält. Die Platte 11 kann als Wärmedämmplatte ausgebildet sein. Die Holzspäne 2 sind mittels Kegelstirnplanfräser 6 (Fig. 2 und 3) hergestellt. Dadurch sind die Holzspäne 2 sehr elastisch und flexibel. Die Faserlängsrichtung des Holzes verläuft überwiegend in Längsrichtung der Holzspäne 2. Die Dichte der Platte 11 beträgt vorteilhaft nicht mehr als 500 kg/m³, insbesondere nicht mehr als 400 kg/m³. Die Wärmeleitfähigkeit der Platte 11 ist vorteilhaft geringer als die Wärmeleitfähigkeit von OSB-Platten. Die Platte 11 ist vorteilhaft formstabil und kompakt und weist nur sehr wenige oder nur vernachlässigbar kleine luftgefüllten Hohlräume auf.

Die Holzspäne 2 der Platte 11 sind insbesondere aus Laubholz, vorzugsweise aus Holz von Weidengewächsen, insbesondere Holz von Pappel (populus), Espe (populus tremula) oder Birke (betula) hergestellt. Die Holzspäne 2 der Platte 11 können jedoch auch zum Teil oder ausschließlich aus Holz von Nadelhölzern hergestellt sein. Vorteilhaft sind die Holzspäne 2 der Platte 11 durch Zerspanen von feuchtem, waldfrischem Holz hergestellt. Die Holzspäne 2 der Platte 11 sind vorteilhaft hergestellt, wie oben zu den Holzspänen 2 des Wärmedämmstoffs 1 beschrieben. Die Holzspäne 2 sind insbesondere in einem Kegelstirnplanfräsverfahren hergestellt, wie oben beschrieben.

## Patentansprüche

1. Verfahren zur Herstellung eines Wärmedämmstoffs mit Holzspänen (2) und Zellulosefasern (3), wobei die Holzspäne (2) eine erste Komponente des Wärmedämmstoffs (1) bilden und wobei die Zellulosefasern (3) eine zweite Komponente des Wärmedämmstoffs (1) bilden, wobei die Holzspäne (2) durch Zerspanung von Holz in feuchtem Zustand hergestellt werden, wobei die Zellulosefasern (3) aus Papier hergestellt werden,
**dadurch gekennzeichnet, dass** die Holzspäne (2) nach der Zerspanung und ohne dass ein Anfeuchten der Holzspäne (2) stattfindet mit einer Restfeuchte von mindestens 20% mit den Zellulosefasern (3) gemischt werden.

2. Verfahren nach Anspruch 1,
**dadurch gekennzeichnet, dass** die Holzspäne (2) durch Zerspanen eines Holzstamms (4) mittels Kegelstirnplanfräser (6) hergestellt sind, wobei der Einstellwinkel (κ) des Kegelstirnplanfräsers (6) 2° bis 45° beträgt und wobei die Drehachse (7) in Blickrichtung der Längsmittelachse (5) des Holzstamms (4) zur Bearbeitungsfläche (10) um einen Neigungswinkel (α) geneigt ist, der mit dem Einstellwinkel (κ) 90° ergibt.

3. Verfahren nach Anspruch 1 oder 2,
**dadurch gekennzeichnet, dass** die Zellulosefasern (3) der zweiten Komponente aus Dekorpapier oder aus Hygienepapier hergestellt werden, wobei Dekorpapier Spezialpapier zur Oberflächenveredelung von Holzwerkstoffen und Hygienepapier Tissuepapier und im Airlaid-Verfahren hergestelltes Papier ist.

4. Verfahren nach Anspruch 3,
**dadurch gekennzeichnet, dass** die Holzspäne (2) durch Zerspanen von feuchtem, insbesondere waldfrischem Holz hergestellt werden.

5. Verfahren nach Anspruch 3 oder 4,
**dadurch gekennzeichnet, dass** die Zellulosefasern (3) der zweiten Komponente (3) eine maximale Faserlänge von 12 mm aufweisen.

6. Verfahren nach einem der Ansprüche 3 bis 5,
**dadurch gekennzeichnet, dass** die Holzspäne (2) aus Holz von Weidengewächsen, insbesondere von Pappel, Espe oder Birke sind.

7. Verfahren nach einem der Ansprüche 3 bis 6,
**dadurch gekennzeichnet, dass** die Faserlängsrichtung des Holzes überwiegend in Längsrichtung der Holzspäne (2) verläuft.

8. Verfahren nach einem der Ansprüche 3 bis 7,
**dadurch gekennzeichnet, dass** der Massenanteil jeder dämmenden Komponente des Wärmedämmstoffes von 10% bis 90% beträgt.

9. Verfahren nach einem der Ansprüche 3 bis 8,
**dadurch gekennzeichnet, dass** die Holzspäne (2) nach dem Zerspanen mit zumindest einer dritten dämmenden Komponente gemischt werden.

10. Verfahren nach einem der Ansprüche 3 bis 9,
**dadurch gekennzeichnet, dass** mindestens eine Komponente des Wärmedämmstoffs (1), insbesondere alle Komponenten des Wärmedämmstoffs, unter Zugabe von mit Wasser verdünntem Flammschutzmittel gemischt werden.

11. Verfahren nach einem der Ansprüche 3 bis 10,
**dadurch gekennzeichnet, dass** der Wärmedämmstoff (1) eine Dämmmatte ist, und dass die Komponenten über ein Bindemittel miteinander verbunden werden, wobei die Dämmmatte insbesondere eine Dichte von 15 kg/m³ bis 120 kg/m³ aufweist.

12. Verfahren nach einem der Ansprüche 3 bis 11,
**dadurch gekennzeichnet, dass** der Wärmedämmstoff (1) eine Dämmplatte ist, und dass die Komponenten über ein Bindemittel miteinander verbunden werden, wobei die Dämmplatte insbesondere eine Dichte von nicht mehr als 500 kg/m³ aufweist.

## Claims

1. Method for producing a heat insulation material having woodchips (2) and cellulose fibres (3), where the woodchips (2) form a first component of the heat insulation material (1) and where the cellulose fibres (3) form a second component of the heat insulation material (1), where the woodchips (2) are produced by chipping wood in the moist state, where the cellulose fibres (3) are produced from paper,
**characterized in that** the woodchips (2) are mixed with the cellulose fibres (3) after chipping and without moistening of the woodchips (2), with a residual moisture content of at least 20%.

2. Method according to Claim 1,
**characterized in that** the woodchips (2) have been produced by chipping a log (4) by means of bevel face milling cutter (6), where the setting angle (κ) of the bevel face milling cutter (6) is 2° to 45° and where the rotational axis (7) in the line of sight of the longitudinal central axis (5) of the log (4) is inclined with respect to the working face (10) by an inclination angle (α) which with the setting angle (κ) makes 90°.

3. Method according to Claim 1 or 2,
**characterized in that** the cellulose fibres (3) of the second component are produced from decorative paper or from hygiene paper, where decorative paper is speciality paper for the surface finishing of wood-based materials and hygiene paper is tissue paper and paper produced in the airlaid process.

4. Method according to Claim 3,
**characterized in that** the woodchips (2) are produced by chipping moist, more particularly forest-fresh, wood.

5. Method according to Claim 3 or 4,
**characterized in that** the cellulose fibres (3) of the second component (3) have a maximum fibre length of 12 mm.

6. Method according to any of Claims 3 to 5,
**characterized in that** the woodchips (2) are from wood from salicaceous plants, more particularly from poplar, aspen or birch.

7. Method according to any of Claims 3 to 6,
**characterized in that** the longitudinal fibre direction of the wood runs predominantly in the longitudinal direction of the woodchips (2).

8. Method according to any of Claims 3 to 7,
**characterized in that** the mass fraction of each insulating component of the heat insulation material is from 10% to 90%.

9. Method according to any of Claims 3 to 8,
**characterized in that** the woodchips (2) after chipping are mixed with at least a third insulating component.

10. Method according to any of Claims 3 to 9,
**characterized in that** at least one component of the heat insulation material (1), more particularly all components of the heat insulation material, are mixed with addition of water-diluted flame retardant.

11. Method according to any of Claims 3 to 10,
**characterized in that** the heat insulation material (1) is an insulating mat, and **in that** the components are joined to one another via a binder, the insulating mat more particularly having a density of 15 kg/m³ to 120 kg/m³.

12. Method according to any of Claims 3 to 11,
**characterized in that** the heat insulation material (1) is an insulating board, and **in that** the components are joined to one another via a binder, the insulating board more particularly having a density of not more than 500 kg/m³.

## Revendications

1. Procédé pour la fabrication d'un isolant thermique comportant des copeaux de bois (2) et des fibres de cellulose (3), les copeaux de bois (2) constituant un premier composant de l'isolant thermique (1) et les fibres de cellulose (3) constituant un deuxième composant de l'isolant thermique (1), les copeaux de bois (2) étant produits par enlèvement de copeaux de bois à l'état humide, les fibres de cellulose (3) étant produites à partir de papier,
**caractérisé en ce que** les copeaux de bois (2) sont mélangés avec les fibres de cellulose (3) après l'enlèvement de copeaux et sans qu'ait lieu un humectage des copeaux de bois (2), avec une humidité résiduelle d'au moins 20 %.

2. Procédé selon la revendication 1,
**caractérisé en ce que** les copeaux de bois (2) sont produits par enlèvement de copeaux d'un tronc d'arbre (4) au moyen de fraise à surfacer (6) munie d'une tête conique, dans lequel l'angle d'attaque (κ) de la fraise à surfacer (6) munie d'une tête conique vaut de 2° à 45° et dans lequel l'axe de rotation (7) dans la direction de visée de l'axe central longitudinal (5) du tronc d'arbre (4) est incliné par rapport à la surface de travail (10) d'un angle d'inclinaison (α) qui donne avec l'angle d'attaque (κ) 90°.

3. Procédé selon la revendication 1 ou 2,
**caractérisé en ce que** les fibres de cellulose (3) du deuxième composant sont produites à partir de papier décoratif ou à partir de papier absorbant, le papier décoratif étant du papier spécial destiné à la finition de surface de matériaux à base de bois et le papier absorbant étant du papier mousseline et du papier produit dans le procédé Airlaid.

4. Procédé selon la revendication 3,
**caractérisé en ce que** les copeaux de bois (2) sont produits par enlèvement de copeaux de bois humide, en particulier fraîchement abattu.

5. Procédé selon la revendication 3 ou 4,
**caractérisé en ce que** les fibres de cellulose (3) du deuxième composant (3) présentent une longueur maximale de fibre de 12 mm.

6. Procédé selon l'une quelconque des revendications 3 à 5,
**caractérisé en ce que** les copeaux de bois (2) sont en bois de salicacées, en particulier de peuplier, tremble ou bouleau.

7. Procédé selon l'une quelconque des revendications 3 à 6,
**caractérisé en ce que** la direction longitudinale des fibres du bois s'étend majoritairement en direction longitudinale des copeaux de bois (2).

8. Procédé selon l'une quelconque des revendications 3 à 7,
**caractérisé en ce que** la proportion en masse de chaque composant isolant de l'isolant thermique vaut de 10 % à 90 %.

9. Procédé selon l'une quelconque des revendications 3 à 8,
**caractérisé en ce que** les copeaux de bois (2) sont, après l'enlèvement de copeaux, mélangés avec au moins un troisième composant isolant.

10. Procédé selon l'une quelconque des revendications 3 à 9,
**caractérisé en ce qu'**au moins un composant de l'isolant thermique (1), en particulier tous les composants de l'isolant thermique, sont mélangés avec addition d'agent ignifuge dilué avec de l'eau.

11. Procédé selon l'une quelconque des revendications 3 à 10,
**caractérisé en ce que** l'isolant thermique (1) est une natte isolante, et **en ce que** les composants sont liés entre eux par un liant, la natte isolante présentant en particulier une densité de 15 kg/m³ à 120 kg/m³.

12. Procédé selon l'une quelconque des revendications 3 à 11,
**caractérisé en ce que** l'isolant thermique (1) est une natte isolante, et **en ce que** les composants sont liés entre eux par un liant, la natte isolante présentant en particulier une densité n'excédant pas 500 kg/m³.
